(19) Europäisches Patentamt
European Patent Office
Office européen des brevets

(11) EP 4 790 074 A1

(12) EUROPEAN PATENT APPLICATION
published in accordance with Art. 153(4) EPC

(43) Date of publication:
**12.08.2026 Bulletin 2026/33**

(21) Application number: **24874648.9**

(22) Date of filing: **02.10.2024**

(51) International Patent Classification (IPC):
***C08F 20/34*** (2006.01) ***C08F 2/00*** (2006.01)

(52) Cooperative Patent Classification (CPC):
**C08F 2/00; C08F 20/34**

(86) International application number:
**PCT/JP2024/035311**

(87) International publication number:
**WO 2025/075047 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 JP 2023174711**

(71) Applicant: **Kuraray Co., Ltd.**
**Kurashiki-shi, Okayama 710-0801 (JP)**

(72) Inventors:
- **UMEDA, Yasunari**
  **Tainai-shi, Niigata 959-2691 (JP)**
- **TAKIHANA, Yota**
  **Tainai-shi, Niigata 959-2691 (JP)**
- **SATO, Kei**
  **Tainai-shi, Niigata 959-2691 (JP)**

(74) Representative: **Müller-Boré & Partner Patentanwälte PartG mbB**
**Friedenheimer Brücke 21**
**80639 München (DE)**

# (54) METHOD FOR PRODUCING POLYMER, AND RESIN COMPOSITION

(57) A method for manufacturing a (meth)acrylic polymer (A) containing a specific amount of a structural unit derived from a monomer represented by Formula (1) shown below at a polymerization conversion rate of 80% or higher, includes: a step a of preparing a reaction mixture containing a monomer (M) comprising a (meth) acrylate monomer containing a secondary amino group represented by Formula (1) and a radical polymerization initiator; and a step b of performing polymerization through a batch-type reaction in a tank-type reactor at 60 to 120°C until a concentration of the radical polymerization initiator in the reaction mixture becomes $1.0 \times 10^{-4}$ mol/L or lower, wherein a specific amount of the radical polymerization initiator is used for the monomer (M), and a half-life $\tau_{1/2}$ of the radical polymerization initiator at a polymerization temperature is 100 to 3,000 sec.

[Formula 1]

(1)

EP 4 790 074 A1

## Description

### Technical Field

The present disclosure relates to a method for manufacturing a polymer, and a resin composition.

### Background Art

It has been known that the photostability of a polymer can be improved by introducing a sterically hindered secondary amine such as a hindered amine into the side chain of the polymer. It is reported that a coating film having excellent photostability can be formed by using a resin emulsion obtained by copolymerizing a polymerizable hindered amine-based photostable monomer disclosed in Patent Literature 1.

A polymer having a sterically hindered secondary amine such as a hindered amine is also useful as an intermediate for obtaining a polymer containing a nitroxide radical structure. In recent years, it is considered that electrolyte layers containing a redox compound consisting of a polymer containing a nitroxide radical structure electrochemically adsorb and desorb carbon dioxide repeatedly, so they are attracting attention. As such a redox compound used for an electrolyte layer of a carbon dioxide separation apparatus, Patent Literature 2 proposes poly (2,2,6,6-tetramethylpiperidinoxy methacrylate).

However, it has been known that an amino group acts as a polymerization inhibitor or a retardant, so that there is a problem that the conversion rate of a polymer having an amino group in its side chain does not reach a satisfactory rate. It is necessary to carry out a purification step for removing residual monomers in order to obtain a desired polymer, thus causing a problem that the efficiency is poor.

In Non-patent Literature 1, it is reported that the conversion rate of the synthesis of poly (2,2,6,6-tetramethylpiperidyl methacrylate), which is an intermediate of the poly (2,2,6,6-tetramethylpiperidinoxy methacrylate), in 48 hours is 40% at maximum. Further, it is stated that a method for protecting secondary amine by a protecting group is effective for increasing the conversion rate, but there is a problem that the process is complicated.

Patent Literature 3 proposes anionic polymerization as a method in which secondary amine is not protected by a protecting group. However, since the molecular weight is as low as 5,000 or smaller and the polymerization temperature is -60°C, there is a problem for industrial manufacturing.

### Citation List

### Patent Literature

Patent Literature 1: Japanese Unexamined Patent Application Publication No. 2018-172612
Patent Literature 2: Japanese Unexamined Patent Application Publication No. 2018-001131
Patent Literature 3: International Patent Publication No. WO2014/087644

### Non Patent Literature

Non-patent Literature 1: Journal of Polymer Science Part A: Polymer Chemistry, 2012, vol. 50, pp. 1394-1407

### Summary of Invention

### Technical Problem

The present disclosure has been made in view of the above-described circumstances, and an object thereof is to provide a simple method for manufacturing a polymer having a sterically hindered secondary amino group at a high conversion rate without requiring protection of the secondary amine by a protecting group, and provide a resin composition.

### Solution to Problem

The inventors of the present disclosure have made diligent studies to achieve the above-described object and consequently completed the present disclosure including forms described below.

[1]: A method for manufacturing a polymer (A) containing 50 to 100 mass% of a structural unit derived from a monomer represented by Formula (1) shown below at a polymerization conversion rate of 80% or higher, including:

a step a of preparing a reaction mixture containing a monomer (hereinafter referred to as a monomer (M)) used for the polymerization of the polymer (A) and a radical polymerization initiator, in which the monomer (M) contains a monomer containing a secondary amino group represented by Formula (1) shown below (hereinafter referred to as a monomer (m1)) and may contain a monomer copolymerizable with the monomer (m1) (hereinafter referred to as a monomer (m2)); and
a step b of performing polymerization through a batch-type reaction in a tank-type reactor at 60 to 120°C until a concentration of the radical polymerization initiator in the reaction mixture becomes $1.0 \times 10^{-4}$ mol/L or lower, in which
the radical polymerization initiator is added simultaneously with the step a and during the step b,
a total of 0.01 to 1 parts by mass of the radical polymerization initiator is used per 100 parts by mass of the monomer (M), and
a half-life $\tau_{1/2}$ of the radical polymerization initiator at a polymerization temperature in the step b is 100 to 3,000 sec.

[Formula 1]

(1)

(in the formula, $R^1$, $R^2$, $R^3$ and $R^4$ are each independently a hydrogen atom or an alkyl group containing 1 to 6 carbon atoms, where: at least one of $R^1$ and $R^2$ is an alkyl group containing 1 to 6 carbon atoms; at least one of $R^3$ and $R^4$ is an alkyl group containing 1 to 6 carbon atoms; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; $X^1$ represents a single bond or a divalent linking group; and n is 0 or 1).

[2]: The method for manufacturing the polymer (A) described in Item [1], in which in the step b, the radical polymerization initiator is added in a divided manner or a continuous manner.
[3]: The method for manufacturing the polymer (A) described in Item [1] or [2], in which a relationship between a last addition time TL of the radical polymerization initiator and a polymerization reaction end time TE is expressed by Expression (1) shown below,

$$TE-TL \geq 6\tau_{1/2} \qquad \text{Expression (1).}$$

[4]: The method for manufacturing the polymer (A) described in Item [1], in which the monomer containing the secondary amino group is a (meth)acrylate monomer containing a secondary amino group represented by Formula (2) shown below,

[Formula 2]

(2)

(in the formula, $R^1$, $R^2$, $R^3$, $R^4$, $R^{11}$ and n are the same as those in Formula (1), and $X^2$ represents a single bond or a divalent linking group).

[5]: A resin composition containing, based on 100 mass% thereof:

0.1 to 20 mass% of a monomer containing a secondary amino group represented by Formula (1) (hereinafter referred to as a monomer (m1)); and

80 to 99.9 mass% of a polymer (A) containing 50 to 100 mass% of a structural unit derived from the monomer (m1), in which

the resin composition does not contain a radical polymerization initiator, or contains 0.01 mass% or less thereof.

[Formula 3]

(1)

(in the formula, $R^1$, $R^2$, $R^3$ and $R^4$ are each independently a hydrogen atom or an alkyl group containing 1 to 6 carbon atoms, where: at least one of $R^1$ and $R^2$ is an alkyl group containing 1 to 6 carbon atoms; at least one of $R^3$ and $R^4$ is an alkyl group containing 1 to 6 carbon atoms; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; $X^1$ represents a single bond or a divalent linking group; and n is 0 or 1).

[6]: The resin composition described in Item [5], in which the monomer containing the secondary amino group is a (meth)acrylate monomer containing a secondary amino group represented by Formula (2) shown below (hereinafter referred to as a monomer (m11)), and the polymer (A) is a (meth)acrylic polymer (A1) containing 50 to 100 mass% of a structural unit derived from the monomer (m11),

[Formula 4]

(2)

(in the formula, R1, R2, R3, R4, R11 and n are the same as those in Formula (1), and X2 represents a single bond or a divalent linking group).

## Advantageous Effects of Invention

According to the present disclosure, it is possible to achieve an excellent effect that it is possible to provide a simple method for manufacturing a polymer having a sterically hindered secondary amino group at a high conversion rate without requiring protection of the secondary amine by a protecting group, and provide a resin composition.

## Description of Embodiments

An example of an embodiment to which the present disclosure is applied will be described hereinafter. The present disclosure is not limited to the embodiment, and other embodiments may fall within the scope of the present disclosure as long as they meet the spirit of the present disclosure. Further, numerical values "A to B" specified in this specification include numerical values A and B. Numerical values specified in this specification are values obtained by a method disclosed in embodiments or examples. Unless otherwise noted, each of various components described in this specification may be used independently as a single component, or two or more of them may be used in combination. The term (meth)acryl is a general term for acryl and methacryl.

The present disclosure relates to a method for manufacturing a polymer (A) containing 50 to 100 mass% of a structural unit derived from a monomer represented by Formula (1) shown below at a polymerization conversion rate of 80% or higher, and includes a step a and a step b described below. The method for manufacturing a polymer (A) (hereinafter also referred to as the manufacturing method disclosed herein) includes polymerization through a batch-type reaction in a tank-type reactor. Note that the polymerization conversion rate refers to a value obtained by a method described in examples (which will be described later).

[Formula 3]

(1)

(in Formula (1), $R^1$, $R^2$, $R^3$ and $R^4$ are each independently a hydrogen atom or an alkyl group containing 1 to 6 carbon atoms, where: at least one of $R^1$ and $R^2$ is an alkyl group containing 1 to 6 carbon atoms; at least one of $R^3$ and $R^4$ is an alkyl group containing 1 to 6 carbon atoms; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; $X^1$ represents a single bond or a divalent linking group; and n is 0 or 1).

The step a is a step of preparing a reaction mixture containing a monomer (hereinafter referred to as a monomer (M)) used for the polymerization of the polymer (A) and a radical polymerization initiator, in which the monomer (M) contains a monomer containing a secondary amino group represented by Formula (1) shown below (hereinafter referred to as a monomer (m1)) and may contain a monomer copolymerizable with the monomer (m1) (hereinafter referred to as a monomer (m2)). Note that the monomer (M) refers to a general term for all monomers used in the polymerization system. In the case of homopolymerization, it refers to one type of monomer (m1), and in the case of copolymerization, it refers to a mixture of monomers. The copolymer includes polymers containing two types or more of monomers (m1). In addition to the above-described forms, the copolymer also includes copolymers obtained by using one or more types of monomers (m1) and one or more types of monomers (m2) as a monomer mixture. The reaction mixture refers to all compounds to be fed to the tank-type reactor, and includes monomer mixtures and radical polymerization initiators, and may include optional components. The optional components include, for example, chain transfer agents, solvents, and additives as long as the use of which does not depart from the spirit of the present disclosure.

The step b is a step of performing polymerization through a batch-type reaction in a tank-type reactor at 60 to 120°C until a concentration of the radical polymerization initiator in the reaction mixture becomes $1.0\times10^{-4}$ mol/L or lower. The expression "performing polymerization until the concentration becomes $1.0\times10^{-4}$ mol/L or lower" means that it is sufficient if the concentration is equal to or lower than the aforementioned concentration, and does not mean the concentration for determining the polymerization end time. In the step b, the monomer (M) is not added.

The radical polymerization initiator is added simultaneously with the step a and during the step b. The concentration of the radical polymerization initiator is a value calculated by Expression (2) shown below.

$$I = I_0 \times \exp(-k_d t) \qquad \text{Expression (2)}$$

I is the concentration of the radical polymerization initiator at a time t; $I_0$ is the concentration of the radical polymerization initiator at the time when it is fed; and $k_d$ is the decomposition rate constant of the radical polymerization initiator at the polymerization temperature in the step b. Note that in the case where the radical polymerization initiator is fed in a divided manner or a continuous manner, I is defined as the sum of the respective $I_0\times\exp(-k_d t)$ terms.

The radical polymerization initiator refers to a compound that generates a reactive radical upon being irradiated with ultraviolet light or visible light or upon being heated, and thereby starts the polymerization reaction. It is important to use a radical polymerization initiator whose half-life $\tau_{1/2}$ is 100 to 3,000 sec at the polymerization temperature in the step b. Such a radical polymerization initiator can be easily selected by measuring its half-life $\tau_{1/2}$ at the reaction temperature or from literature. In the whole steps, a total of 0.01 to 1 parts by mass of the radical polymerization initiator is used per 100 parts by mass of the monomer (M). The initial amount of the radical polymerization initiator added in the step a is preferably 0.005 to 0.5 parts by mass per 100 parts by mass of the monomer (M).

In order to obtain the polymer (A) containing 50 to 100 mass% of a structural unit derived from the monomer represented by Formula (1), the ratio between the amounts of the monomer (m1) and the monomer (m2) is determined with consideration given to the polymerization rates of the monomer (m1) and the monomer (m2) in the step a. In the case where the polymerization rates are substantially equal to each other irrespective of the types of the used monomers, the monomer composition is adjusted so that 50 to 100 mass% of the monomer (m1) represented by Formula (1) is contained in 100 mass% of the monomer (M).

The polymer (A) may be a homopolymer or a copolymer. In the case of a copolymer, there is no limitation on its form. Examples of copolymers include a block copolymer and a random copolymer.

The content of the structural unit derived from the monomer (m1) in the polymer (A) is 50 to 100 mass% as described above. Further, its lower limit value is preferably 60 mass%, more preferably 70 mass%, and still more preferably 90 mass%. The content of the structural unit derived from the monomer (m1) in 100 mass% of the polymer (A) may be 100 mass%.

The content of the structural unit derived from the monomer (m2) in 100 mass% of the polymer (A) is 50 mass% or less. Further, its upper limit value is preferably 40 mass%, more preferably 30 mass%, and still more preferably 10 mass%.

In the case where the polymerization rate of the used monomer (m1) in the monomer mixture is substantially equal to that of the used monomer (m2), the content of the monomer (m1) in the monomer mixture is 50 to 100 mass%, preferably 60 mass% or more, more preferably 70 mass% or more, and particularly preferably 90 mass% or more. 100 mass% of the monomer (m1) may be used. The content of the monomer (m2) (in the case of a plurality of types of monomers, the total amount) in the monomer mixture is 50 mass% or less, preferably 40 mass% or less, more preferably 30 mass% or less, and particularly preferably 10 mass% or less.

Preferred examples of the monomer (m1) include a (meth)acrylate monomer containing a secondary amino group such as 4-(meth)acryloyloxy-2,2,6,6-tetramethylpiperidine; (meth)acrylamide monomer containing a secondary amino group such as 4-(meth)acrylamide-2,2,6,6-tetramethylpiperidine; vinyl ether monomer containing a secondary amino group such as 4-(ethenyloxy)-2,2,6,6-tetramethylpiperidine; and vinyl monomer containing a secondary amino group such as 2,2,6,6-tetramethyl-4-vinylpiperidine.

The monomer containing the secondary amino group in the present disclosure is preferably a (meth)acrylate monomer containing a secondary amino group represented by Formula (2) shown below (hereinafter referred to as a monomer (m11)).

[Formula 4]

$R^{11}$, O, O, $X^2$, $R^4$, $R^3$, N, H, $R^1$, $R^2$, n (2)

(in the formula, R1, R2, R3, R4, R11 and n are the same as those in Formula (1), and X2 represents a single bond or a divalent linking group).

In the case where the polymerization rate of the monomer (m11) in the monomer mixture is substantially equal to that of the used monomer (m2), the content of the monomer (m11) in the monomer mixture is 50 to 100 mass%, preferably 60 mass% or more, more preferably 70 mass% or more, and particularly preferably 90 mass% or more. 100 mass% of the monomer (m11) may be used. The content of the monomer (m2) (in the case of a plurality of types of monomers, the total amount) in the monomer mixture is 50 mass% or less, preferably 40 mass% or less, more preferably 30 mass% or less, and particularly preferably 10 mass% or less.

Preferred examples of the monomers (m11) include 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, 4-(meth) acryloyl-1-methoxy-2,2,6,6-tetramethylpiperidine, 4-cyano-4-(meth)acryloyloxy-2,2,6,6-tetramethylpiperidine, 1-(meth) acryloyl-4-(meth)acryloylamino-2,2,6,6-tetramethylpiperidine, 4-crotonoylamino-2,2,6,6-tetramethylpiperidine, 4-(meth) acryloylamino-1,2,2,6,6-pentamethylpiperidine, 4-cyano-4-(meth)acryloylamino-2,2,6,6-tetramethylpiperidine, 4-crotonoyloxy-2,2,6,6-tetramethylpiperidine, 1-(meth)acryloyl-4-cyano-4-(meth)acryloylamino-2,2,6,6-tetramethylpiperidine, and 1-crotonoyl-4-crotonoyloxy-2,2,6,6-tetramethylpiperidine.

Preferred examples of the monomer (m2) include alkyl methacrylate having an alkyl group containing two or more carbon atoms, such as methyl methacrylate, ethyl methacrylate, and butyl methacrylate; aryl methacrylate such as phenyl methacrylate; cycloalkyl methacrylate such as cyclohexyl methacrylate and norbornenyl methacrylate; alkyl

methacrylacrylate such as methyl acrylate, ethyl acrylate, and butyl acrylate; aryl acrylate such as phenyl acrylate; cycloalkyl acrylate such as cyclohexyl acrylate and norbornenyl acrylate; styrene, α-methylstyrene, p-methylstyrene, and m-methylstyrene; acrylamide and methacrylamide; acrylonitrile and methacrylonitrile; and vinyl monomers having only one polymerizable alkenyl group in one molecule such as methacrylic acid and acrylic acid.

Preferred examples of radical polymerization initiators include t-hexylperoxyisopropyl monocarbonate, t-hexylperoxy 2-ethylhexanoate, 1,1,3,3-tetramethylbutylperoxy 2-ethylhexanoate, t-butylperoxypivalate, t-hexylperoxypivalate, t-butylperoxyneodecanoate, t-hexylperoxyneodecanoate, 1,1,3,3-tetramethyl butyl peroxyneodecanoate, 1,1-bis(t-hexylperoxy) cyclohexane, benzoyl peroxide, 3,5,5-trimethylhexanoyl peroxide, lauroyl peroxide, 2,2'-azobis (2-methylpropionitrile), 2,2'-azobis (2-methylbutyronitrile), and dimethyl 2,2'-azobis (2-methylpropionate). Examples also include t-hexylperoxy 2-ethylhexanoate, 1,1-bis(t-hexylperoxy) cyclohexane, and dimethyl 2,2'-azobis (2-methylpropionate). Only one type of radical polymerization initiator is used, or two or more types of radical polymerization initiators are used in combination.

The total amount of the used radical polymerization initiator(s) is 0.01 to 1 parts by mass per 100 parts by mass of the monomer (M). The total amount is preferably 0.02 to 0.9 parts by mass, more preferably 0.03 to 0.8 parts by mass, and still more preferably 0.05 to 0.7 parts by mass. When the total amount is less than 0.01 parts by mass, the polymerization conversion rate deteriorates. On the other hand, when the total amount exceeds 1 parts by mass, there is a concern that when the obtained polymer (A) is used as a member of an electrochemical device, a side reaction may occur due to the residual radical polymerization initiator.

In the manufacturing method disclosed herein, the polymerization temperature in the step b refers to, when the polymerization reaction is carried out in a tank-type reactor, the temperature of the liquid in the tank-type reactor. Further, the polymerization temperature in the step b is 60 to 120°C, preferably 65 to 115°C, and particularly preferably 70 to 110°C. When the polymerization temperature is in the aforementioned range, the polymerization conversion rate can be increased in a short time.

The half-life $\tau_{1/2}$ of the radical polymerization initiator at the polymerization temperature is 100 to 3,000 sec, preferably 150 to 2,800 sec, and more preferably 200 to 2,700 sec. The half-life $\tau_{1/2}$ of the radical polymerization initiator refers to a value calculated by Expressions (3) and (4) shown below.

$$\tau_{1/2} = [\ln(2)]/k_d \qquad \text{Expression (3)}$$

$$k_d = A \times \exp(-E_a/RT) \qquad \text{Expression (4)}$$

Note that Expression (3) is obtained by substituting $I=(1/2)I_0$ into Expression (2) and converting it into a natural logarithm. A is a frequency factor; $E_a$ is an activation energy; R is a gas constant; T is the polymerization temperature (absolute temperature (K)); and $k_d$ is the decomposition rate constant of the radical polymerization initiator at the absolute temperature T.

In the manufacturing method disclosed herein, as described above, the concentration of the radical polymerization initiator in the reaction mixture at the end of the polymerization reaction is $1.0 \times 10^{-4}$ mol/L or lower. The aforementioned concentration is preferably $0.9 \times 10^{-4}$ mol/L or lower, and more preferably $0.8 \times 10^{-4}$ mol/L or lower. By adjusting the concentration of the radical polymerization initiator in the reaction mixture at the end of the polymerization reaction to $1.0 \times 10^{-4}$ mol/L or lower, the amount of the radical polymerization initiator in the obtained polymer (A) is reduced, so that the obtained polymer (A) becomes useful when it is used as a member of an electrochemical device. Note that in the manufacturing method disclosed herein, the end of the polymerization reaction refers to the time when the heating is stopped in order to end the polymerization reaction in the tank-type reactor. That is, the end of the polymerization reaction refers to the time when the cooling of the liquid in the tank-type reactor is started.

A chain transfer agent can be suitably used as an optional component of the reaction mixture. Examples of chain transfer agents include alkyl mercaptans such as n-octyl mercaptan, n-dodecyl mercaptan, t-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-(β-thiopropionate), and pentaerythritol tetrakisthiopropionate; α-methylstyrene dimer; and terpinolene. Among these, monofunctional alkyl mercaptans such as n-octyl mercaptan and n-dodecyl mercaptan are preferred. Only one type of a chain transfer agent is used, or two or more types of chain transfer agents are used in combination. The amount of the used chain transfer agent(s) is preferably 0.1 to 1 parts by mass, more preferably 0.012 to 0.48 parts by mass, and still more preferably 0.3 to 0.6 parts by mass based on 100 parts by mass of the monomer mixture.

When it is necessary to adjust the viscosity of the liquid in the tank-type reactor in which raw materials are dissolved, a solvent can be included in the reaction raw materials. The solvent is preferably an aromatic hydrocarbon such as benzene, toluene, or ethylbenzene. Only one type of a solvent is used, or two or more types of solvents are used in combination. The amount of the used solvent is preferably 1,000 parts by mass or less, more preferably 500 parts by mass

or less, and still more preferably 300 parts by mass or less based on 100 parts by mass of the monomer mixture (M). There is no limitation on the lower limit of the amount of the used solvent as long as it satisfies the above-described purport and the like. However, the lower limit is preferably 50 parts by mass in view of the solubility of the monomer(s) in the solvent.

In the manufacturing method disclosed herein, the method for adding the radical polymerization initiator is not limited to any particular methods. However, the radical polymerization initiator is preferably added in a divided manner or a continuous manner in the step b.

In the case where the radical polymerization initiator is added in a divided manner, there are no particular limitations on the number of times of additions or the amount added in each addition. However, in order to efficiently improve the polymerization conversion rate, it is preferred that the next addition of the radical polymerization initiator is started before the concentration of the previously-added radical polymerization initiator in the tank-type reactor becomes $1.0\times10^{-4}$ mol/L or lower. The concentration of previously-added radical polymerization initiator in the tank-type reactor is obtained by the above-shown Formula (2).

In the manufacturing method disclosed herein, the polymerization conversion rate at the end of the polymerization reaction is 80% or higher, preferably 85% or higher, and more preferably 90% or higher. According to the manufacturing method disclosed herein, since the polymerization is carried out through the step a and the step b, it is possible to obtain a polymer having a sterically hindered secondary amino group at a high conversion rate without protecting the secondary amine by a protecting group and without performing a step of removing the monomer(s). Note that the manufacturing method may include steps other than the step a and the step b (e.g., a purification step, a step for removing aggregates) without departing from the spirit of the present disclosure. Note that it does not mean that a step for protecting secondary amine by a protecting group and a step for removing a monomer(s) should be excluded.

In the manufacturing method disclosed herein, the last addition time TL of the radical polymerization initiator and the polymerization reaction end time TE in the step b preferably satisfy a relationship expressed by Expression (1) shown below.

$$TE\text{-}TL \geq 6\tau_{1/2} \qquad \text{Expression (1).}$$

By adjusting TE-TL to the above-shown range, the amount of the radical polymerization initiator in the obtained resin composition is reduced, so that the obtained resin composition becomes useful when it is used as a member of an electrochemical device.

The weight average molecular weight (Mw) of the polymer (A) obtained by the manufacturing method disclosed herein is not limited to any particular values, but is preferably 1,000 to 200,000. The lower limit value of Mw is more preferably 2,000, still more preferably 3,000, particularly preferably 4,000, and most preferably 5,000. The upper limit value of Mw is more preferably 180,000, still more preferably 150,000, particularly preferably 130,000, and most preferably 100,000. When Mw is 1,000 or larger, the electrochemical stability of the polymer (A) is improved. When Mw is 200,000 or smaller, the film-forming property is improved when the polymer (A) is used as a member of an electrochemical device.

The resin composition according to the present disclosure contains, based on 100 mass% thereof, 0.1 to 20 mass% of a monomer containing a secondary amino group represented by Formula (1) (hereinafter referred to as a monomer (m1)) and 80 to 99.9 mass% of a polymer (A) containing 50 to 100 mass% of a structural unit derived from the monomer (m1), and does not contain a radical polymerization initiator, or contains 0.01 mass% or less thereof.

In the resin composition according to the present disclosure, the monomer containing the secondary amino group is preferably a (meth)acrylate monomer containing a secondary amino group represented by Formula (2) (i.e., a monomer (m11)), and the polymer (A) is preferably a (meth)acrylic polymer (A1) containing 50 to 100 mass% of a structural unit derived from the monomer (m11).

The content of the monomer (m11) in the resin composition according to the present disclosure is preferably 0.1 to 20 mass%, and the content of the (meth)acrylic polymer (A1) is preferably 80 to 99.9 mass%.

## Examples

Next, the present disclosure will be described in a more specific manner by showing examples. Note that the present disclosure is not limited by the examples. Physical properties and the like were measured by methods described below.

(Weight average molecular weight (Mw), Number average molecular weight (Mn), Molecular weight distribution (Mw/Mn))

The average molecular weights (Mw and Mn) and the molecular weight distribution (Mw/Mn) of polymers were obtained by a GPC (Gel Permeation Chromatography) method. A solution in which triethylamine was mixed in tetra-

hydrofuran at a concentration of 200 mM/L was used as an eluent. Two columns each of which was TSKgel SuperMultipore HZM-M manufactured by Tosoh Corporation and a column Super HZ4000 were connected in series. HLC-8320 (product number) equipped with a differential refractive-index detector (RI detector), manufactured by Tosoh Corporation was used as a GPC apparatus. A sample solution was prepared by dissolving 8 mg of a resin to be measured in 5 mL of a mixed solution of tetrahydrofuran and triethylamine. The temperature of a column oven was set to 40°C, and a chromatogram was measured by injecting 20 μL of the sample solution into the apparatus at an eluent flow rate of 0.35 mL/min. Standard polymethyl methacrylate having molecular weights in a range of 400 to 5,000,000 were GPC-measured at 10 points, and a calibration curve showing a relationship between the retention time and the molecular weight was created. The average molecular weights (Mw and Mn) and the molecular weight distribution (Mw/Mn) of the polymer to be measured were determined based on this calibration curve.

(Polymerization Conversion Rate)

After the end of the polymerization reaction, 1 mg of the reaction mixture was dissolved in 2 mL of deuterated chloroform, and $^1$H-NMR was measured. The integral value (IM) of the proton of the vinyl double bond of the LA-87 monomer (6.0 - 6.2 ppm) and the integral value (IP) of the proton adjacent to the methine carbon of the side chain of the poly LA-87 polymer (5.0 - 5.3 ppm) were obtained, and the polymerization conversion rate was calculated by the expression shown below.

$$\text{Polymerization Conversion Rate (\%)} = IP/(IM+IP)\times 100$$

(Raw Materials)

The following raw materials were used in Examples and Comparative Examples. LA-87: "ADK STB LA-87" manufactured by ADEKA (compound name: 2,2,6,6-tetramethyl-4-piperidyl methacrylate) Perbutyl D: "Perbutyl D" manufactured by NOF Corporation (compound name: di-tert-butyl peroxide)

(Example 1)

100 parts by mass of toluene and 100 parts by mass of LA-87 were fed into an autoclave equipped with a stirrer, a thermometer, a nitrogen gas feeding tube, a monomer feeding tube, and a collection tube. Then, the inside of the vessel was replaced with nitrogen. The polymerization was started by heating the mixture to 100°C, and press-injecting a solution in which 0.02 parts by mass of azobisisobutyronitrile (AIBN) was dissolved in 0.05 parts by mass of toluene by using nitrogen. After one hour from the start of the polymerization, a solution in which 0.02 parts by mass of AIBN was dissolved in 0.05 parts by mass of toluene was press-injected by using nitrogen. This additional press-injection operation of the aforementioned initiator solution was repeated four times in total at intervals of one hour (the total number of injections of the initiator, including the injection at the start of the polymerization was five). Then, the reaction was continued for another one hour, after which heating was stopped. This timing at the end of the heating was used as the end of the polymerization reaction. Next, the reaction vessel was cooled to room temperature. Evaluations results are shown in Table 1.

(Examples 2 to 7, Comparative Examples 1 to 6)

The polymerization reactions were carried out in the same manner as in Example 1, except that the formulations and conditions were changed as shown in Table 1. Evaluations results are shown in Table 1.

[Table 1]

Table 1

| Item | | | Unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Prescription | Solvent | toluene | parts by mass | 100 | 233 | 100 | 100 | 100 | 100 | 100 | 900 | 900 | 900 | 233 | 233 | 100 |
| | Monomer | LA-87 | parts by mass | 100 | 100 | 100 | 100 | 100 | 100 | 100 | 100 | 100 | 100 | 100 | 100 | 100 |
| | Chain transfer agent | nOM | parts by mass | 0 | 0 | 0.4 | 0.9 | 1.86 | 3.6 | 1.52 | 0 | 0 | 0 | 0 | 0 | 0 |
| | Radical polymerization initiator | AIBN | parts by mass | 0.200 | 0.444 | 0.200 | 0.200 | 0.200 | 0.200 | 0.200 | 12.1 | 3.0 | 12.1 | 0.111 | 0.444 | |
| | | perbutyl D | parts by mass | | | | | | | | | | | | | 0.200 |
| | | AIBN (Per) | parts by mass | 0.040 | 0.111 | 0.040 | 0.040 | 0.040 | 0.040 | 0.040 | 12.1 | 3.0 | 12.1 | 0.056 | 0.111 | |
| Conditions | Polymerization initiator adding method | Number of times added | - | 5 | 4 | 5 | 5 | 5 | 5 | 5 | 1 | 1 | 1 | 2 | 4 | 5 |
| | | Addition interval | hr | 1 | 2 | 1 | 1 | 1 | 1 | 1 | – | – | – | 1 | 0.5 | 1 |
| | Polymerization temperature | | ° C | 100 | 100 | 100 | 100 | 100 | 100 | 90 | 65 | 65 | 80 | 100 | 140 | 100 |
| | Radical polymerization initiator half-life of $\tau$ 1/2 | | sec. | 416 | 416 | 416 | 416 | 416 | 416 | 1349 | 34561 | 34561 | 4671 | 416 | 6.7 | 722695 |
| | Final addition time TL of polymerization initiator | | hr | 4 | 6 | 4 | 4 | 4 | 4 | 4 | 0 | 0 | 0 | 1 | 1.5 | 4 |
| | Polymerization reaction end time TE | | hr | 5 | 6.5 | 5 | 5 | 5 | 5 | 6.5 | 6 | 10 | 6 | 2 | 3 | 5 |
| | TE-TL | | hr | 1 | 0.5 | 1 | 1 | 1 | 1 | 2.5 | 6 | 10 | 6 | 1 | 1.5 | 1 |
| | Amount of remaining polymerization initiator | | $\times 10^{-4}$mol/L | 0.014 | 0.270 | 0.014 | 0.014 | 0.014 | 0.014 | 0.06 | 419 | 78 | 26 | 0.007 | 0.000 | 61 |
| Results | Polymerization conversion rate | | % | 90.1 | 84.5 | 92.1 | 93.2 | 93.3 | 92.6 | 96.0 | 60 | 61.1 | 64.9 | 11.1 | 25.8 | 6.2 |
| | Weight average molecular weight Mw | | g/mol | 409100 | 174500 | 61000 | 31000 | 19800 | 11000 | 23100 | 34000 | 42000 | 56300 | 192000 | 25700 | 89200 |
| | Mn | | g/mol | 101800 | 51200 | 33000 | 18000 | 11500 | 7000 | 12400 | 20000 | 23200 | 31800 | 62000 | 11200 | 38900 |
| | Mw/Mn | | - | 4 | 3.4 | 1.8 | 1.7 | 1.7 | 1.6 | 1.9 | 1.7 | 1.8 | 1.8 | 3.5 | 2.3 | 2.3 |
| | Amount of polymerization initiator remaining in (meth)acrylic resin composition | | mass% | 0 | 0.001 | 0 | 0 | 0 | 0 | 0 | 6.0 | 1.1 | 0.4 | 0 | 0 | 0.18 |

As shown in Comparative Examples 1 to 3, when the amount of the radical polymerization initiator per 100 parts by mass of the monomer (M) was larger than 1 parts by mass, and the radical polymerization initiator was added at once, the polymerization conversion rate was low and the productivity was poor. It was confirmed that the conversion rate was low in Comparative Example 4. Further, as shown in Comparative Example 5, when the polymerization temperature exceeded 120°C in the step b, the polymerization conversion rate was low and the productivity was poor. Further, as shown in Comparative Example 6, when the half-life $\tau_{1/2}$ of the radical polymerization initiator exceeded 3,000, the polymerization conversion rate was low and the productivity was poor. In contrast, according to the manufacturing method disclosed herein, as shown in Examples 1 to 7, it was confirmed that the polymerization conversion rate could be improved in a relatively short time and the productivity was excellent. Further, according to the manufacturing method disclosed herein, as shown in Examples 1 to 7, the amount of the radical polymerization initiator remaining in the reaction liquid after the end of the polymerization reaction is small. Therefore, it has been confirmed that the concern about the side reaction of the polymer obtained by the manufacturing method disclosed herein is insignificant, and hence the polymer is useful when it is used as a member of an electrochemical device.

## Industrial Applicability

The polymer and the resin composition according to the present disclosure can be suitably used as a coating film or the like having excellent photostability. Further, the polymer according to the present disclosure is also useful as an intermediate for obtaining a polymer containing a nitroxide radical structure. Note that electrolyte layers containing a redox compound consisting of a polymer containing a nitroxide radical structure are attracting attention because it is considered that they electrochemically adsorb and desorb carbon dioxide repeatedly.

This application is based upon and claims the benefit of priority from Japanese patent application No. 2023-174711, filed on October 6, 2023, the disclosure of which is incorporated herein in its entirety by reference.

## Claims

**1.** A method for manufacturing a polymer (A) containing 50 to 100 mass% of a structural unit derived from a monomer represented by Formula (1) shown below at a polymerization conversion rate of 80% or higher, comprising:

a step a of preparing a reaction mixture containing a monomer (hereinafter referred to as a monomer (M)) used for the polymerization of the polymer (A) and a radical polymerization initiator, in which the monomer (M) contains a monomer containing a secondary amino group represented by Formula (1) shown below (hereinafter referred to as a monomer (m1)) and may contain a monomer copolymerizable with the monomer (m1) (hereinafter referred to as a monomer (m2)); and

a step b of performing polymerization through a batch-type reaction in a tank-type reactor at 60 to 120°C until a concentration of the radical polymerization initiator in the reaction mixture becomes $1.0\times10^{-4}$ mol/L or lower, wherein

the radical polymerization initiator is added simultaneously with the step a and during the step b,

a total of 0.01 to 1 parts by mass of the radical polymerization initiator is used per 100 parts by mass of the monomer (M), and

a half-life $\tau_{1/2}$ of the radical polymerization initiator at a polymerization temperature in the step b is 100 to 3,000 sec.

[Formula 1]

(1)

(in the formula, $R^1$, $R^2$, $R^3$ and $R^4$ are each independently a hydrogen atom or an alkyl group containing 1 to 6

carbon atoms, where: at least one of $R^1$ and $R^2$ is an alkyl group containing 1 to 6 carbon atoms; at least one of $R^3$ and $R^4$ is an alkyl group containing 1 to 6 carbon atoms; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; $X^1$ represents a single bond or a divalent linking group; and n is 0 or 1).

**2.** The method for manufacturing the polymer (A) according to claim 1, wherein in the step b, the radical polymerization initiator is added in a divided manner or a continuous manner.

**3.** The method for manufacturing the polymer (A) according to claim 1, wherein a relationship between a last addition time TL of the radical polymerization initiator and a polymerization reaction end time TE is expressed by Expression (1) shown below,

$$TE-TL \geq 6\tau_{1/2} \qquad \text{Expression (1).}$$

**4.** The method for manufacturing the polymer (A) according to claim 1, wherein the monomer containing the secondary amino group is a (meth)acrylate monomer containing a secondary amino group represented by Formula (2) shown below,

[Formula 2]

(2)

(in the formula, $R^1$, $R^2$, $R^3$, $R^4$, $R^{11}$ and n are the same as those in Formula (1), and $X^2$ represents a single bond or a divalent linking group).

**5.** A resin composition containing, based on 100 mass% thereof:

0.1 to 20 mass% of a monomer containing a secondary amino group represented by Formula (1) (hereinafter referred to as a monomer (m1)); and
80 to 99.9 mass% of a polymer (A) containing 50 to 100 mass% of a structural unit derived from the monomer (m1), wherein
the resin composition does not contain a radical polymerization initiator, or contains 0.01 mass% or less thereof.

[Formula 3]

(1)

(in the formula, $R^1$, $R^2$, $R^3$ and $R^4$ are each independently a hydrogen atom or an alkyl group containing 1 to 6 carbon atoms, where: at least one of $R^1$ and $R^2$ is an alkyl group containing 1 to 6 carbon atoms; at least one of $R^3$ and $R^4$ is an alkyl group containing 1 to 6 carbon atoms; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; $X^1$ represents a single bond or a divalent linking group; and n is 0 or 1).

**6.** The resin composition according to claim 5, wherein the monomer containing the secondary amino group is a (meth) acrylate monomer containing a secondary amino group represented by Formula (2) shown below (hereinafter referred to as a monomer (m11)), and the polymer (A) is a (meth)acrylic polymer containing 50 to 100 mass% of a structural unit derived from the monomer (m11),

[Formula 4]

(2)

(in the formula, R1, R2, R3, R4, R11 and n are the same as those in Formula (1), and X2 represents a single bond or a divalent linking group).

## INTERNATIONAL SEARCH REPORT

International application No.
**PCT/JP2024/035311**

**A. CLASSIFICATION OF SUBJECT MATTER**

***C08F 20/34***(2006.01)i; ***C08F 2/00***(2006.01)i
FI: C08F20/34; C08F2/00 A

According to International Patent Classification (IPC) or to both national classification and IPC

**B. FIELDS SEARCHED**

Minimum documentation searched (classification system followed by classification symbols)

C08F20/34; C08F2/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2020-117647 A (KURARAY CO., LTD.) 06 August 2020 (2020-08-06) claims, examples | 1-6 |
| A | WO 2020/017631 A1 (KURARAY CO., LTD.) 23 January 2020 (2020-01-23) claims, examples | 1-6 |
| A | WO 2022/019065 A1 (KURARAY CO., LTD.) 27 January 2022 (2022-01-27) claims, examples | 1-6 |
| A | JP 2014-143067 A (SUMITOMO SEIKA CHEMICALS CO., LTD.) 07 August 2014 (2014-08-07) claims, examples | 1-6 |
| A | JP 2009-104819 A (WASEDA UNIVERSITY) 14 May 2009 (2009-05-14) claims, examples | 1-6 |
| A | JP 2001-081631 A (TOYO BOSEKI KABUSHIKI KAISHA) 27 March 2001 (2001-03-27) claims, examples | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 October 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035311**

| Patent document cited in search report | Publication date (day/month/year) | Patent family member(s) | Publication date (day/month/year) |
|---|---|---|---|
| JP 2020-117647 A | 06 August 2020 | (Family: none) | |
| WO 2020/017631 A1 | 23 January 2020 | TW 202012468 A | |
| WO 2022/019065 A1 | 27 January 2022 | US 2023/0271132 A1<br>claims, examples<br>EP 4173700 A1<br>CN 115803101 A<br>KR 10-2023-0042050 A | |
| JP 2014-143067 A | 07 August 2014 | (Family: none) | |
| JP 2009-104819 A | 14 May 2009 | (Family: none) | |
| JP 2001-081631 A | 27 March 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018172612 A
- JP 2018001131 A
- WO 2014087644 A
- JP 2023174711 A


### Non-patent literature cited in the description


- *Journal of Polymer Science Part A: Polymer Chemistry*, 2012, vol. 50, 1394-1407